# EUROPÄISCHE PATENTSCHRIFT

(11) **EP 3 516 420 B1**
(45) Veröffentlichungstag und Bekanntmachung des Hinweises auf die Patenterteilung: **31.08.2022**
(21) Anmeldenummer: 17780638.7
(22) Anmeldetag: 19.09.2017
(51) Int. Cl.: G01S 17/42, G01S 17/93, G01S 7/481

(54) **SENDEEINRICHTUNG FÜR EINE OPTISCHE ERFASSUNGSVORRICHTUNG, OPTISCHE ERFASSUNGSVORRICHTUNG, KRAFTFAHRZEUG SOWIE VERFAHREN**
TRANSMITTING APPARATUS FOR AN OPTICAL SENSING DEVICE, OPTICAL SENSING DEVICE, MOTOR VEHICLE AND METHOD
DISPOSITIF ÉMETTEUR POUR UN DISPOSITIF DE DÉTECTION OPTIQUE, DISPOSITIF DE DÉTECTION OPTIQUE, VÉHICULE AUTOMOBILE ET PROCÉDÉ

(30) Priorität: 22.09.2016 DE 102016117852
(43) Veröffentlichungstag der Anmeldung: 31.07.2019
(73) Patentinhaber: Valeo Schalter und Sensoren GmbH, 74321 Bietigheim-Bissingen (DE)
(72) Erfinder: LIN, Lin, 74321 Bietigheim-Bissingen (DE); HORVATH, Peter, 74321 Bietigheim-Bissingen (DE); SCHULER, Thomas, 74321 Bietigheim-Bissingen (DE)
(74) Vertreter: Withopf, Kristina
(86) Internationale Anmeldenummer: PCT/EP2017/073557
(87) Internationale Veröffentlichungsnummer: WO 2018/054871

(56) Entgegenhaltungen:
- EP-A2- 2 921 877
- EP-A2- 2 983 030
- WO-A1-93/00602
- DE-A1-102012 025 281
- DE-A1-102012 102 244

## Beschreibung

Die Erfindung betrifft eine Sendeeinrichtung für eine optische Erfassungsvorrichtung eines Kraftfahrzeugs, welche dazu ausgelegt ist, einen Umgebungsbereich des Kraftfahrzeugs mittels eines Lichtstrahls abzutasten, und welche eine Lichtquelle zum Aussenden des Lichtstrahls und eine Ablenkeinheit aufweist, wobei die Ablenkeinheit dazu ausgelegt ist, den von der Lichtquelle auf die Ablenkeinheit ausgesendeten Lichtstrahl unter unterschiedlichen Abtastwinkeln in den Umgebungsbereich abzulenken. Die Erfindung betrifft außerdem eine optische Erfassungsvorrichtung für ein Kraftfahrzeug, ein Kraftfahrzeug mit zumindest einer solchen optischen Erfassungsvorrichtung sowie ein Verfahren.

Im vorliegenden Fall richtet sich das Interesse auf optische Erfassungsvorrichtungen für Kraftfahrzeuge, insbesondere auf Laserscanner. Dabei ist es bekannt, einen Umgebungsbereich des Kraftfahrzeugs mittels der optischen Erfassungsvorrichtung zu überwachen. Mittels der Erfassungsvorrichtung können Objekte in dem Umgebungsbereich des Kraftfahrzeugs detektiert werden und Informationen über die erfassten Objekte, beispielsweise eine relative Lage der Objekte zu dem Kraftfahrzeug, einem Fahrerassistenzsystem des Kraftfahrzeugs bereitgestellt werden. Das Fahrerassistenzsystem kann basierend auf diesen Informationen beispielsweise Maßnahmen zur Vermeidung einer Kollision des Kraftfahrzeugs mit dem Objekt einleiten, beispielsweise das Kraftfahrzeug vor der Kollision automatisch abbremsen.

Bei Laserscannern gemäß dem Stand der Technik wird von einer Sendeeinrichtung des Laserscanners üblicherweise ein Lichtstrahl, beispielsweise ein Laserstrahl, in den Umgebungsbereich ausgesendet und der Umgebungsbereich durch Verändern eines Abtastwinkels beziehungsweise einer Abtastrichtung, in welcher der Lichtstrahl ausgesendet wird, abgetastet beziehungsweise abgescannt. Sobald der Lichtstrahl auf ein Objekt in dem Umgebungsbereich trifft, wird zumindest ein Teil des Lichtstrahls an dem Objekt zurück zu dem Laserscanner reflektiert. Eine Empfangseinrichtung des Laserscanners empfängt den reflektierten Teil des Lichtstrahls und bestimmt anhand einer Laufzeit des Lichtstrahls beziehungsweise einer Zeitdauer zwischen dem Aussenden des Lichtstrahls und dem Empfangen des reflektierten Teils des Lichtstrahls einen Abstand des Objekts bezüglich des Kraftfahrzeugs. Unter Kenntnis des Abtastwinkels beim Aussenden des Lichtstrahls kann außerdem eine Orientierung beziehungsweise eine Richtung des Objektes zu dem Kraftfahrzeug bestimmt werden. Aus der Orientierung sowie dem Abstand kann dann die relative Lage des Objekts zu dem Kraftfahrzeug bestimmt werden.

Zum Verändern des Abtastwinkels wird der Lichtstrahl üblicherweise von einer Ablenkeinheit der Sendeeinrichtung abgelenkt. Die Ablenkeinheit ist dabei in der Regel als ein rotierbarer beziehungsweise schwenkbarer Spiegel ausgebildet, welcher den Lichtstrahl in die unterschiedlichen Abtastrichtungen reflektiert, wobei die Abtastrichtung über einen Schwenkwinkel beziehungsweise eine Orientierung des schwenkbaren Spiegels eingestellt wird. Ein Winkelbereich in dem Umgebungsbereich, innerhalb welchem der Lichtstrahl in den Umgebungsbereich abgelenkt wird, bildet dabei ein Sichtfeld der Sendeeinrichtung. Dieses Sichtfeld soll idealerweise einen besonders großen Öffnungswinkel sowie eine bestimmte Soll-Form aufweisen. Zum Vergrößern des Öffnungswinkels existiert daher üblicherweise ein Winkel zwischen dem auf den Spiegel einfallenden Lichtstrahl und dem von dem Spiegel reflektierten Lichtstrahl, also der Abtastrichtung. Dies kann dazu führen, dass eine Ist-Form des Sichtfeldes von der Soll-Form des Sichtfeldes abweicht, also das Sichtfeld der Sendeeinrichtung verzerrt ist. Geringe Verzerrungen können zwar softwareseitig kompensiert werden, indem bestimmte Bereiche des Sichtfeldes nicht genutzt werden. Da diese Bereiche aber dennoch durch den Lichtstrahl ausgeleuchtet werden, weist die optische Erfassungsvorrichtung gemäß dem Stand der Technik eine geringe Effizienz sowie hohe Verluste auf.

Es ist Aufgabe der vorliegenden Erfindung, eine Lösung bereitzustellen, wie eine optische Erfassungsvorrichtung für ein Kraftfahrzeug besonders effizient und verlustarm gestaltet werden kann.

Diese Aufgabe wird erfindungsgemäß durch eine Sendeeinrichtung, eine optische Erfassungsvorrichtung, ein Kraftfahrzeug sowie ein Verfahren gemäß den jeweiligen unabhängigen Patentansprüchen gelöst. Vorteilhafte Ausführungsformen der Erfindung sind Gegenstand der abhängigen Patentansprüche, der Beschreibung sowie der Figuren. Gemäß einer Ausführungsform einer erfindungsgemäßen Sendeeinrichtung für eine optische Erfassungsvorrichtung eines Kraftfahrzeugs ist diese Sendeeinrichtung dazu ausgelegt, einen Umgebungsbereich des Kraftfahrzeugs mittels eines Lichtstrahls abzutasten. Die Sendeeinrichtung weist eine Lichtquelle zum Aussenden des Lichtstrahls und eine Ablenkeinheit auf, wobei die Ablenkeinheit dazu ausgelegt ist, den von der Lichtquelle auf die Ablenkeinheit ausgesendeten Lichtstrahl unter unterschiedlichen Abtastwinkeln in den Umgebungsbereich abzulenken. Erfindungsgemäß weist die Ablenkeinheit einen Freiformspiegel auf, wobei der Freiformspiegel zumindest zwei Oberflächenelemente mit unterschiedlichen Neigungswinkeln aufweist und dazu ausgelegt ist, den Lichtstrahl zum Erzeugen eines vorbestimmten Soll-Sichtfeldes der Sendeeinrichtung unter vorbestimmten, mit den Neigungswinkeln korrespondierenden Sollwerten für den Abtastwinkel zu reflektieren.

Eine erfindungsgemäße Sendeeinrichtung für eine optische Erfassungsvorrichtung eines Kraftfahrzeugs ist dazu ausgelegt, einen Umgebungsbereich des Kraftfahrzeugs mittels eines Lichtstrahls abzutasten. Die Sendeeinrichtung weist eine Lichtquelle zum Aussenden des Lichtstrahls und eine Ablenkeinheit auf, wobei die Ablenkeinheit dazu ausgelegt ist, den von der Lichtquelle auf die Ablenkeinheit ausgesendeten Lichtstrahl unter unterschiedlichen Abtastwinkeln in den Umgebungsbereich abzulenken. Darüber hinaus weist die Ablenkeinheit einen Freiformspiegel auf, wobei der Freiformspiegel zumindest zwei Oberflächenelemente mit unterschiedlichen Neigungswinkeln aufweist. Der Freiformspiegel ist dazu ausgelegt, den Lichtstrahl zum Erzeugen eines vorbestimmten Soll-Sichtfeldes der Sendeeinrichtung unter vorbestimmten, mit den Neigungswinkeln korrespondierenden Sollwerten für den Abtastwinkel zu reflektieren.

Mittels der optischen Erfassungsvorrichtung, welche insbesondere als ein Lidar-System (Lidar-"Light Detection and Ranging") beziehungsweise als ein Laserscanner ausgebildet ist, kann der Umgebungsbereich des Kraftfahrzeugs überwacht werden, indem Objekte beziehungsweise Hindernisse für das Kraftfahrzeug in dem Umgebungsbereich detektiert werden. Dazu weist die optische Erfassungsvorrichtung die Sendeeinrichtung auf, welche die Lichtquelle zum Erzeugen des Lichtstrahls, insbesondere eines Laserstrahls, umfasst. Die Lichtquelle, welche beispielsweise ein Sendelement in Form von einer Laserdiode aufweist, kann den Laserstrahl unter einem bestimmten Einfallswinkels auf die Ablenkeinheit aussenden, wobei die Ablenkeinheit den Lichtstrahl zum Bereitstellen einer Abtastbewegung beziehungsweise Scanbewegung unter den unterschiedlichen Abtastwinkeln ablenkt. Dies bedeutet, dass der Lichtstrahl zum Abtasten des Umgebungsbereiches von der Sendeeinrichtung nacheinander beziehungsweise sequenziell in unterschiedliche Abtastrichtungen abgelenkt wird. Mit anderen Worten bedeutet dies, dass der Abtastwinkel, unter welchem der Lichtstrahl in den Umgebungsbereich ausgesendet wird, schrittweise verändert wird. Während einer ersten

Messung beziehungsweise zu einem ersten Messzeitpunkt wird der Lichtstrahl in eine erste Abtastrichtung reflektiert, während einer darauffolgenden zweiten Messung beziehungsweise zu einem zweiten nachfolgenden Messzeitpunkt wird der Lichtstrahl in eine zweite Abtastrichtung reflektiert, usw. Durch das Reflektieren des Lichtstrahls unter den unterschiedlichen Abtastwinkeln wird ein Winkelbereich in dem Umgebungsbereich des Kraftfahrzeugs ausgeleuchtet, welcher das Sichtfeld der Sendeeinrichtung, insbesondere das Sichtfeld der optischen Erfassungsvorrichtung, ausbildet. Der Abtastwinkel kann dabei als ein Winkel angegeben werden, um welchen die Abtastrichtung, horizontal und/oder vertikal, von einer vorbestimmten Richtung, beispielsweise einer Fahrzeuglängsrichtung, abweicht. Mittels der Ablenkeinheit kann der Lichtstrahl insbesondere horizontal und vertikal abgelenkt werden, sodass der Umgebungsbereich rasterartig, also zeilenweise oder spaltenweise, abgetastet beziehungsweise überstrichen wird.

Um nun das vorbestimmte Soll-Sichtfeld, welches eine vorbestimmte Soll-Form aufweist, zu erzeugen, sind für die verschiedenen Abtastwinkel Sollwerte, also Soll-Abtastwinkel, vorbestimmt. Vorzugsweise ist eine Ebene des mittels der Sollwerte für den Abtastwinkel erzeugten Soll-Sichtfeldes senkrecht zu einer Hauptabtastrichtung der Sendeeinrichtung rechteckförmig ausgebildet. Das Soll-Sichtfeld weitet sich ausgehend von der Sendeeinrichtung entlang der Hauptabtastrichtung auf und weist somit eine pyramidenförmige Form auf. Dies bedeutet, dass alle Ebenen parallel zu einer Grundfläche der Pyramide rechteckförmig ausgebildet sind. Zum Bereitstellen der Sollwerte für den Abtastwinkel weist die Ablenkeinheit den Freiformspiegel auf. Der Freiformspiegel ist dabei ein optisches Element mit einer für den Lichtstrahl reflexiven beziehungsweise spiegelnden Oberfläche, wobei die reflexive beziehungsweise reflektierende Oberfläche als eine Freiformfläche ausgebildet ist. Die Freiformfläche weist dabei die zumindest zwei Oberflächenelemente mit unterschiedlichen Orientierungen beziehungsweise Neigungswinkeln auf. Erfindungsgemäß ist die Freiformfläche zumindest bereichsweise gekrümmt beziehungsweise gewölbt. Durch die unterschiedlichen Neigungswinkel wird der Lichtstrahl bei gleichem Einfallswinkel auf die Ablenkeinheit nach dem Reflektieren in unterschiedliche Abtastrichtungen abgelenkt.

Der Erfindung liegt hierbei die Erkenntnis zugrunde, dass durch eine planare, ebene Spiegeloberfläche, also eine Oberfläche, welche nicht als Freiformfläche mit Oberflächenelementen unterschiedlicher Neigungswinkel ausgebildet ist, das Sichtfeld der Sendeeinrichtung verzerrt werden kann, da die von der planaren Oberfläche bereitgestellten Istwerte des Abtastwinkels nicht den Sollwerten entsprechen. Somit weicht eine Ist-Form des Sichtfeldes von der Soll-Form ab. Eine solche verzerrte Ist-Form kann beispielsweise durch eine fächerförmige Ebene des Sichtfeldes senkrecht zur Hauptabtastrichtung ausgebildet sein. Diese Verzerrung wird durch die Freiformfläche des Spiegels verhindert oder kompensiert, indem die Neigungswinkel der Oberflächenelemente so gewählt werden, dass der einfallende Lichtstrahl unter dem jeweiligen, mit der aktuellen Messung korrespondierenden Soll-Abtastwinkel reflektiert wird. Insbesondere ist dazu jedem Sollwert für den Abtastwinkel ein Oberflächenelement zum Reflektieren des Lichtstrahls unter dem jeweiligen Sollwert für den Abtastwinkel zugeordnet. Dies bedeutet, dass zum Erzeugen eines bestimmten Sollwertes für den Abtastwinkel, also zum ablenken des Lichtstrahls in einer vorbestimmten Soll-Abtastrichtung, der Lichtstrahl an demjenigen Oberflächenelement reflektiert wird, durch dessen Neigungswinkel der Lichtstrahl in der entsprechenden Soll-Abtastrichtung abgelenkt werden kann. Anders ausgedrückt wird zum Bereitstellen eines bestimmten Soll-Abtastwinkels der von der Lichtquelle ausgesendete Lichtstrahl an dem zugehörigen Oberflächenelement reflektiert.

Durch die Freiformfläche kann also gewährleistet werden, dass der ausgeleuchtete Winkelbereich voll ausgenutzt werden kann und Objekte in diesem Bereich sicher und zuverlässig detektiert werden können. Mittels der Sendeeinrichtung kann also eine besonders effiziente und verlustarme optische Erfassungsvorrichtung für ein Kraftfahrzeug realisiert werden.

Gemäß einer nicht-erfindungsgemäßen Ausführungsform ist der Freiformspiegel schwenkbar gelagert und dazu ausgelegt, den Lichtstrahl in Abhängigkeit von einem Schwenkwinkel des Freiformspiegels und von den Neigungswinkeln der Oberflächenelemente unter den vorbestimmten Sollwerten für den Abtastwinkel zu reflektieren. Gemäß dieser Ausführungsform weist die Ablenkeinheit insbesondere nur den Freiformspiegel auf, welcher schwenkbar beziehungsweise rotierbar gelagert ist. Zum Erzeugen der Abtastbewegung wird der Schwenkwinkel des Freiformspiegels insbesondere schrittweise verändert, sodass der Lichtstrahl unter dem mit dem Schwenkwinkel sowie dem Neigungswinkel des reflektierenden Oberflächenelementes korrespondierenden Soll-Abtastwinkels in den Umgebungsbereich reflektiert wird. Gemäß dieser Ausführungsform kann der vorbestimmte Sollwert für den Abtastwinkel mit einem besonders geringen Bauteilaufwand bereitgestellt werden.

Erfindungsgemäß weist die Ablenkeinheit zusätzlich zu dem Freiformspiegel einen schwenkbaren Spiegel auf, welcher dazu ausgelegt ist, den von der Lichtquelle auf den schwenkbaren Spiegel ausgesendeten Lichtstrahl unter zu Schwenkwinkeln des schwenkbaren Spiegels korrespondierenden Istwerten für den Abtastwinkel zu reflektieren, wobei der Freiformspiegel dazu ausgelegt ist, zum Erzeugen des Soll-Sichtfeldes eine Abweichung zwischen dem durch den schwenkbaren Spiegel erzeugten Istwert und dem Sollwert für den Abtastwinkel zu kompensieren. Insbesondere ist der Freiformspiegel unbeweglich in einem optischen Pfad zwischen dem schwenkbaren Spiegel und dem Umgebungsbereich angeordnet und dazu ausgelegt, den von dem schwenkbaren Spiegel unter den Istwerten für den Abtastwinkel auf den Freiformspiegel reflektierten Lichtstrahl unter den vorbestimmten Sollwerten abzulenken beziehungsweise zu reflektieren.

Erfindungsgemäß weist die Ablenkeinheit also den schwenkbaren Spiegel und den Freiformspiegel auf, wobei der Lichtstrahl von der Lichtquelle unter einem bestimmten Einfallswinkel zunächst auf den schwenkbaren Spiegel ausgesendet wird. Dieser schwenkbare Spiegel reflektiert den Lichtstrahl in Abhängigkeit von dem aktuellen Schwenkwinkel beziehungsweise von einer aktuellen Lage des schwenkbaren Spiegels unter bestimmten Istwerten für den Abtastwinkel. Dabei kann, insbesondere ab einer bestimmten Größe der Sollwerte des Abtastwinkels, der von dem schwenkbaren Spiegel bereitgestellte Istwert von dem Sollwert abweichen. Ohne Kompensierung dieser Abweichung ergibt sich ein gegenüber dem Soll-Sichtfeld verzerrtes Ist-Sichtfeld der Sendeeinrichtung. Diese Verzerrung kann jedoch in vorteilhafter Weise mittels des Freiformspiegels kompensiert werden. Der Freiformspiegel ist dabei fest beziehungsweise unbeweglich, also nicht-rotierbar beziehungsweise nicht-schwenkbar, in der Sendeeinrichtung verbaut. Der Lichtstrahl wird also zunächst von der Lichtquelle auf den schwenkbaren Spiegel ausgesendet, welcher den Lichtstrahl mit unterschiedlichen Istwerten für den Abtastwinkel auf den Freiformspiegel reflektiert. Der Freiformspiegel kann eine Ablenkung des Lichtstrahls für diejenigen Istwerte des Abtastwinkels verändern, welche von den zugehörigen Sollwerten abweichen. Die Sendeeinrichtung ist somit besonders einfach gestaltet, da an dem Grundaufbau der Sendeeinrichtung mit der Lichtquelle und dem schwenkbaren Spiegel keine Veränderungen vorgenommen werden müssen. Der Freiformspiegel kann also der Sendeeinrichtung schnell und einfach zum Kompensieren der Verzerrung des Sichtfeldes hinzugefügt werden.

Dabei ist vorgesehen sein, dass der schwenkbare Spiegel als ein Mikrospiegelaktor mit einer ebenen Oberfläche ausgebildet ist und eine durch die Oberflächenelemente des Freiformspiegels gebildete Oberfläche des Freiformspiegels zumindest bereichsweise gewölbt ausgebildet ist. Der als Mikrospiegelaktor beziehungsweise MEMS-Spiegel (MEMS - Mikroelektromechanisches System) ausgebildete schwenkbare Spiegel weist die ebene, planare spiegelnde Oberfläche auf. Der Freiformspiegel hingegen weist die gewölbte Oberfläche auf, wobei eine Krümmung der Oberfläche derart bestimmt ist, dass sie die Abweichung zwischen den von dem MEMS-Spiegel bereitgestellten Istwerten und den Sollwerten für den Abtastwinkel kompensiert.

Erfindungsgemäß sind die Neigungswinkel der jeweiligen Oberflächenelemente des Freiformspiegels in Abhängigkeit von den Schwenkwinkeln des schwenkbaren Spiegels vorgegeben. Der Erfindung liegt hierbei die Erkenntnis zugrunde, dass die Verzerrung des Ist-Sichtfeldes bezüglich des Soll-Sichtfeldes durch den schwenkbaren Spiegel verursacht wird, insbesondere durch einen Winkel zwischen der Einfallsrichtung des Lichtstrahls auf den schwenkbaren Spiegel und der von dem schwenkbaren Spiegel bereitgestellten Abtastrichtung. Die Einfallsrichtung ist dabei diejenige Richtung, in welcher die Lichtquelle den Lichtstrahl auf den schwenkbaren Spiegel aussendet. Eine Stärke der Verzerrung ist dabei abhängig von dem jeweiligen Schwenkwinkel des schwenkbaren Spiegels. Insbesondere an Rändern des Sichtfeldes, welche durch die maximalen Schwenkwinkel des schwenkbaren Spiegels erzeugt werden, kann es zu Verzerrungen kommen, welche mittels des Freiformspiegels ausgeglichen werden können.

Erfindungsgemäß
weist der schwenkbare Spiegel eine charakteristische Transferfunktion auf, durch welche eine Verzerrung eines durch den schwenkbaren Spiegel erzeugten Ist-Sichtfeldes bezüglich des Soll-Sichtfeldes in Abhängigkeit von den Schwenkwinkeln des schwenkbaren Spiegels beschrieben ist. Die Neigungswinkel der Oberflächenelemente des Freiformspiegels sind derart bestimmt, dass der Freiformspiegel eine Inverse der charakteristischen Transferfunktion aufweist. Die Verzerrung ist dabei anhand von einer Abweichung von Formen von Ebenen des Ist-Sichtfeldes und des Soll-Sichtfeldes senkrecht zu einer Hauptabtastrichtung der Sendeeinrichtung bestimmt. Zum Herstellen des Freiformspiegels für die Sendeeinrichtung werden die Neigungswinkel der Oberflächenelemente bestimmt, indem zunächst die Transferfunktion des schwenkbaren Spiegels bestimmt wird. Dazu kann beispielsweise das durch den schwenkbaren Spiegel, erzeugte, nicht kompensierte Ist-Sichtfeld erfasst werden. Anders ausgedrückt wird das Ist-Sichtfeld der Sendeeinrichtung bestimmt, deren Ablenkeinheit den Freiformspiegel nicht aufweist. Insbesondere wird dabei die Form der Ebene des Ist-Sichtfeldes senkrecht zu der Hauptabtastrichtung der Sendeeinrichtung bestimmt. Die Ebene des Ist-Sichtfeldes ist üblicherweise fächerförmig, während hingegen die Ebene des Soll-Sichtfeldes rechteckförmig ist. Diese Relation beziehungsweise dieser Zusammenhang zwischen der Form des Soll-Sichtfeldes und der Form des Ist-Sichtfeldes kann über die Transferfunktion beschrieben werden, welche insbesondere abhängig von den Schwenkwinkeln des schwenkbaren Spiegels ist. Als die Transferfunktion wird insbesondere also diejenige Funktion bestimmt, durch welche die Soll-Form des Sichtfeldes in die Ist-Form des Sichtfeldes überführt wird. Anders ausgedrückt ergibt die mit der Transferfunktion beaufschlagte Soll-Form des Sichtfeldes die Ist-Form des Sichtfeldes. Unter Kenntnis der Transferfunktion wird ein Oberflächenverlauf des Freiformspiegels so bestimmt, dass durch den in der Ablenkeinheit angeordneten Freiformspiegel die Transferfunktion invertiert wird und somit die Verzerrung kompensiert wird. Die mit der inversen Transferfunktion beaufschlagte Ist-Form des Sichtfeldes ergibt also die Soll-Form des Sichtfeldes. Durch die Bestimmung der Transferfunktion und der inversen Transferfunktion kann also der Freiformspiegel in vorteilhafter Weise ideal an den schwenkbaren Spiegel angepasst werden und somit das Soll-Sichtfeld erzeugt werden.

Es erweist sich als vorteilhaft, wenn die Lichtquelle zum Bereitstellen der Sollwerte für den Abtastwinkel zumindest zwei separat ansteuerbare Sendeelemente aufweist. Die Lichtquelle kann beispielsweise zumindest zwei Sendeelemente in Form Laserdioden oder LEDs aufweisen, welche separat ansteuerbar sind. Beispielsweise kann für Sollwerte des Abtastwinkels aus einem ersten Wertebereich ein erstes der Sendeelemente zum Aussenden des Lichtstrahls angesteuert werden und für Sollwerte des Abtastwinkels aus einem zweiten Wertebereich ein zweites der Sendeelemente zum Aussenden des Lichtstrahls angesteuert werden. Die Sendeelemente senden dabei den Lichtstrahl in unterschiedliche Richtungen aus, wobei einer ersten Richtung ein erster Einfallswinkel des Lichtstrahls auf den schwenkbaren Spiegel, und einer zweiten Richtung ein zweiter Einfallswinkel des Lichtstrahls auf den schwenkbaren Spiegel zugeordnet ist, usw. Durch das jeweilige aktuell aussendende Sendeelement kann also der Einfallswinkel des Lichtstrahls auf den schwenkbaren Spiegel beeinflusst werden und damit eine durch den schwenkbaren Spiegel hervorgerufene Abweichung zwischen dem Sollwert und dem Istwert des Ablenkwinkels bereits beim Aussenden des Lichtstrahls zumindest verringert werden.

Insbesondere weist die Lichtquelle dabei eine Matrixanordnung von Sendeelementen auf, wobei für jeden Abtastwinkel eine bestimmte Anzahl an Sendeelementen, welche in der Matrixanordnung eine bestimmte Position aufweisen, zum Aussenden des Lichtstrahls angesteuert werden. Eine die Anzahl und die Position der Sendeelemente umfassende Ansteuerstrategie für die Sendeelemente kann beispielsweise vorbestimmt werden, sodass diese Ansteuerstrategie für die Sendeelemente der Lichtquelle ebenfalls die Inverse der Transferfunktion des schwenkbar gelagerten Spiegels bereitstellt. Die Ansteuerung der Sendeelemente kann beispielsweise von einer Steuereinrichtung der optischen Erfassungsvorrichtung durchgeführt werden.

Auch kann vorgesehen sein, dass die Sendeeinrichtung zum Bereitstellen der Sollwerte für den Abtastwinkel zusätzlich ein Linsenelement mit einer Freiformfläche zum Transmittieren des von der Ablenkeinheit abgelenkten Lichtstrahls in den Umgebungsbereich aufweist, wobei das Linsenelement dazu ausgelegt ist, eine Abweichung des von der Ablenkeinheit erzeugten Istwertes von dem Sollwert für den Abtastwinkel zu kompensieren. Dies bedeutet, dass die Sendeeinrichtung zusätzlich das Linsenelement mit der Freiformfläche, also eine Freiformlinse, aufweist, welche in einem optischen Pfad zwischen der Ablenkeinheit und dem Umgebungsbereich angeordnet ist. Dies bedeutet, dass der von der Ablenkeinheit reflektierte Lichtstrahl vor dem Aussenden in den Umgebungsbereich durch das Linsenelement hindurchtritt, welches optisch transparent für den von dem Freiformspiegel reflektierten Lichtstrahl ist. Das Linsenelement weist dabei ebenfalls eine Freiformfläche auf, deren Oberflächenelemente unterschiedliche Neigungswinkel aufweisen und durch welche die Ablenkung des Lichtstrahls, also der Abtastwinkel, eingestellt werden kann. Die Freiformlinse, deren Oberfläche zumindest bereichsweise gewölbt ist, kann den Wert des Abtastwinkels beim Transmittieren verändern, falls der Istwert nicht dem Sollwert für den Abtastwinkel entspricht. Dies kann beispielsweise dann vorkommen, wenn die Abweichung zwischen den Istwerten und den Sollwerten nicht vollständig durch den Freiformspiegel kompensiert werden kann. Mittels der Freiformlinse kann das Sichtfeld der Sendeeinrichtung also in vorteilhafter Weise ebenfalls entzerrt werden.

Die Erfindung betrifft außerdem eine optische Erfassungsvorrichtung, insbesondere einen Laserscanner, für ein Kraftfahrzeug zum Überwachen eines Umgebungsbereiches des Kraftfahrzeugs, mit einer erfindungsgemäßen Sendeeinrichtung oder einer Ausführungsform der erfindungsgemäßen Sendeeinrichtung sowie einer Empfangseinrichtung. Die Empfangseinrichtung ist dazu ausgelegt, einen an einem Objekt in dem Umgebungsbereich reflektierten Teil des Lichtstrahls zu empfangen und anhand einer Zeitdauer zwischen dem Aussenden des Lichtstrahls und dem Empfangen des reflektierten Teils des Lichtstrahls einen Abstand des Objektes zu dem Kraftfahrzeug zu bestimmen.

Ein erfindungsgemäßes Kraftfahrzeug umfasst zumindest eine optische Erfassungsvorrichtung. Das Kraftfahrzeug ist insbesondere als ein Personenkraftwagen ausgebildet. Der von der Erfassungsvorrichtung erfasste Abstand des Objektes kann beispielsweise einer Steuereinrichtung eines Fahrerassistenzsystems des Kraftfahrzeugs bereitgestellt werden, welches beispielsweise ein zumindest semiautonomes Fahren des Kraftfahrzeugs ermöglicht. Beispielsweise kann das Kraftfahrzeug von der Steuereinrichtung automatisch abgebremst werden, wenn von der Erfassungseinrichtung erfasst wurde, dass der Abstand des Objekts zu dem Kraftfahrzeug einen vorbestimmten Abstandsschwellwert unterschreitet.

Die Erfindung betrifft außerdem ein Verfahren zum Erzeugen eines Soll-Sichtfeldes für eine Sendeeinrichtung einer optischen Erfassungsvorrichtung eines Kraftfahrzeugs. Erfindungsgemäss werden für die Sendeeinrichtung eine Lichtquelle zum Aussenden des Lichtstrahls und eine Ablenkeinheit bereitgestellt, wobei mittels der Ablenkeinheit ein von der Lichtquelle auf die Ablenkeinheit ausgesendeter Lichtstrahl in unterschiedliche Abtastwinkel abgelenkt werden kann. Erfindungsgemäss wird für die Ablenkeinheit ein Freiformspiegel bereitgestellt, wobei der Freiformspiegel mit zumindest zwei Oberflächenelementen mit unterschiedlichen Neigungswinkeln gefertigt wird und der Lichtstrahl zum Erzeugen des Soll-Sichtfeldes der Sendeeinrichtung unter vorbestimmten, mit den Neigungswinkeln korrespondierenden Sollwerten für den Abtastwinkel in den Umgebungsbereich reflektiert wird.

Erfindungsgemäß
werden bei dem Verfahren für die Sendeeinrichtung eine Lichtquelle zum Aussenden des Lichtstrahls und eine Ablenkeinheit bereitgestellt, wobei mittels der Ablenkeinheit ein von der Lichtquelle auf die Ablenkeinheit ausgesendeter Lichtstrahl in unterschiedlicher Abtastwinkel abgelenkt wird. Darüber hinaus wird für die Ablenkeinheit ein Freiformspiegel bereitgestellt, wobei der Freiformspiegel mit zumindest zwei Oberflächenelementen mit unterschiedlichen Neigungswinkeln gefertigt wird und der Lichtstrahl zum Erzeugen des Soll-Sichtfeldes der Sendeeinrichtung entlang vorbestimmter, mit den Neigungswinkeln korrespondierender Sollwerte für den Abtastwinkel in den Umgebungsbereich reflektiert wird.

Erfindungsgemäss wird die Sendeeinrichtung mit einer Ablenkeinheit aufweisend einen schwenkbaren Spiegel sowie den Freiformspiegel gefertigt. Zum Bestimmen der Neigungswinkel der Oberflächenelemente wird eine Transferfunktion für den schwenkbaren Spiegel bestimmt, welche eine Abweichung einer Form eines Ist-Sichtfeldes der Sendeeinrichtung von einer Form des Soll-Sichtfeldes beschreibt. Die Neigungswinkel der Oberflächenelemente des Freiformspiegels werden dabei so bestimmt und hergestellt, dass durch den Freiformspiegel ein Inverses der Transferfunktion bereitgestellt wird.

Die mit Bezug auf die erfindungsgemäße Sendeeinrichtung vorgestellten bevorzugten Ausführungsformen und deren Vorteile gelten entsprechend für die erfindungsgemäße optische Erfassungsvorrichtung, das erfindungsgemäße Kraftfahrzeug sowie für das erfindungsgemäße Verfahren.

Dabei zeigen:
- Fig. 1: eine schematische Darstellung einer Ausführungsform eines erfindungsgemäßen Kraftfahrzeugs;
- Fig. 2: eine schematische Darstellung einer Sendeeinrichtung einer optischen Erfassungsvorrichtung gemäß dem Stand der Technik;
- Fig. 3: eine schematische Darstellung eines Ist-Sichtfeldes der Sendeeinrichtung gemäß Fig. 2;
- Fig. 4: eine schematische Darstellung eines Zusammenhangs zwischen dem Ist-Sichtfeld gemäß Fig. 3 und einem Soll-Sichtfeld;
- Fig. 5: eine schematische Darstellung einer Sendeeinrichtung gemäß einer Ausführungsform einer erfindungsgemäßen optischen Erfassungsvorrichtung;
- Fig. 6: eine schematische Darstellung eines Freiformspiegels;
- Fig. 7: eine schematische Darstellung eines Oberflächenverlaufes eines Freiformspiegels;
- Fig. 8: eine schematische Darstellung eines weiteren Oberflächenverlaufes eines Freiformspiegels; und
- Fig. 9: eine schematische Darstellung einer Ausführungsform einer erfindungsgemäßen optischen Erfassungsvorrichtung.

In den Figuren sind gleiche sowie funktionsgleiche Elemente mit den gleichen Bezugszeichen versehen.

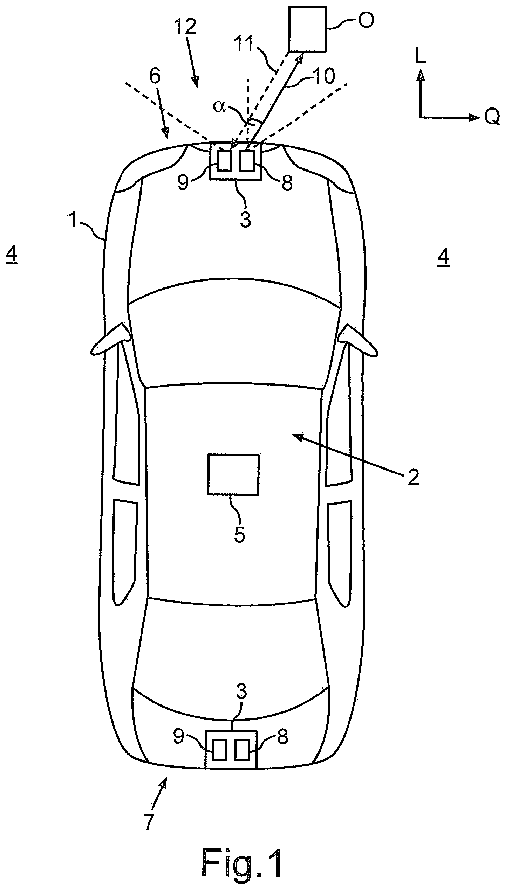

Fig. 1 zeigt ein Kraftfahrzeug 1 gemäß der vorliegenden Erfindung. Im vorliegenden Fall ist das Kraftfahrzeug 1 als ein Personenkraftwagen ausgebildet. Das Kraftfahrzeug 1 umfasst ein Fahrerassistenzsystem 2, welches dazu ausgelegt ist, einen Fahrer des Kraftfahrzeugs 1 beim Führen des Kraftfahrzeugs 1 zu unterstützen. Das Fahrerassistenzsystem 2 umfasst zumindest eine optische Erfassungsvorrichtung 3, welche dazu ausgelegt ist, einen Umgebungsbereich 4 des Kraftfahrzeugs 1 zu überwachen. Insbesondere können mittels der Erfassungsvorrichtung 3 ein Abstand sowie eine Orientierung eines Objektes O in dem Umgebungsbereich 4 des Kraftfahrzeugs 1 erfasst werden und beispielsweise einer Steuereinrichtung 5 des Fahrerassistenzsystems 2 bereitgestellt werden. Die Steuereinrichtung 5 kann das Kraftfahrzeug 1 zur Kollisionsvermeidung beispielsweise automatisch abbremsen, falls der Abstand des Objektes O einen vorbestimmten Schwellwert unterschreitet. Im vorliegenden Fall weist das Fahrerassistenzsystem 2 zwei Erfassungsvorrichtungen 3 auf, wobei eine erste Erfassungsvorrichtung 3 in einem Frontbereich 6 des Kraftfahrzeugs 1 angeordnet ist und dazu dient, den Umgebungsbereich 4 vor dem Kraftfahrzeug 1 zu überwachen, und eine zweite Erfassungsvorrichtung 3 in einem Heckbereich 7 des Kraftfahrzeugs 1 angeordnet ist und dazu dient, den Umgebungsbereich 4 hinter dem Kraftfahrzeug 1 zu überwachen. Es können auch weitere Erfassungsvorrichtungen 3, beispielsweise in Seitenbereichen des Kraftfahrzeugs 1, vorgesehen sein.

Die optische Erfassungsvorrichtung 3 ist im vorliegenden Fall als ein Laserscanner ausgebildet und weist eine Sendeeinrichtung 8 sowie eine Empfangseinrichtung 9 auf. Die Sendeeinrichtung 8 sendet einen Lichtstrahl 10 in den Umgebungsbereich 4 aus und die Empfangseinrichtung 9 empfängt einen an dem Objekt O reflektierten Teil 11 des Lichtstrahls 10. Die Empfangseinrichtung 9 kann anhand einer Laufzeit zwischen dem Aussenden des Lichtstrahls 10 und dem Empfangen des reflektierten Teils 11 des Lichtstrahls 10 den Abstand des Objektes O erfassen. Der Lichtstrahl 10 wird dabei nacheinander beziehungsweise schrittweise unter verschiedenen Abtastwinkeln α abgelenkt. Dadurch wird der Umgebungsbereich 4 mittels des Lichtstrahls 10 rasterartig abgetastet beziehungsweise gescannt. Gemäß Fig. 1 sind horizontale Komponenten des Abtastwinkels α in einer von einer Fahrzeuglängsrichtung L und einer Fahrzeugquerrichtung Q aufgespannten Horizontalebene gezeigt. Die horizontale Komponente des Abtastwinkels α sowie eine hier nicht gezeigte vertikale Komponente des Abtastwinkels α in einer von der Fahrzeuglängsrichtung L und einer Fahrzeughochrichtung aufgespannten Ebene sind der Sendeeinrichtung 8 bekannt, wodurch auch eine Orientierung beziehungsweise Richtung des Objektes O relativ zum Kraftfahrzeug 1 bekannt ist. Ein Winkelbereich 12 in dem Umgebungsbereich 4, welcher mittels des in unterschiedliche Abtastrichtungen orientierten Lichtstrahls 10 ausgeleuchtet wird, bildet ein Sichtfeld der Sendeeinrichtung 8.

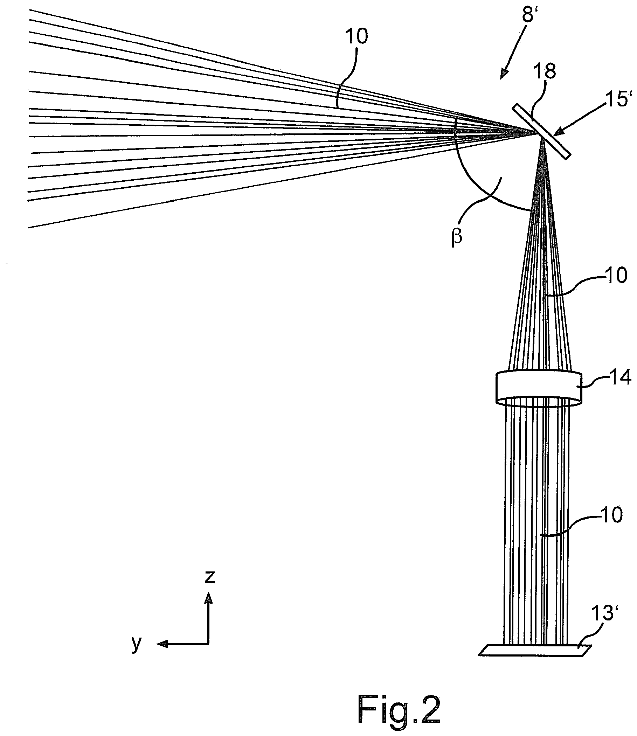

Fig. 2 zeigt eine Sendeeinrichtung 8' gemäß dem Stand der Technik. Die Sendeeinrichtung 8' weist eine Lichtquelle 13' auf, welche dazu ausgelegt ist, den Lichtstrahl 10 auszusenden. Außerdem weist die Sendeeinrichtung 8' einen Kollimator 14 auf, welcher den Lichtstrahl 10 bündelt. Der gebündelte Lichtstrahl 10 wird auf eine Ablenkeinheit 15' bestehend aus einem schwenkbaren Spiegel 18, welcher hier als ein Mikrospiegelaktor beziehungsweise MEMS-Spiegel ausgebildet ist, ausgesendet. Der schwenkbare Spiegel 18 dient dazu, den Lichtstrahl 10 unter den unterschiedlichen Abtastwinkeln α in den Umgebungsbereich 4 zu reflektieren. Zum Erzeugen des Sichtfeldes, welches einen besonders großen Öffnungswinkel, beispielsweise 150° aufweist, existiert ein Winkelunterschied β zwischen einer Einfallsrichtung des Lichtstrahls 10, welche hier entlang der z-Richtung orientiert ist, und der Abtastrichtung, welche hier entlang der y-Richtung orientiert ist: Der Winkel β beträgt hier beispielsweise 90°.

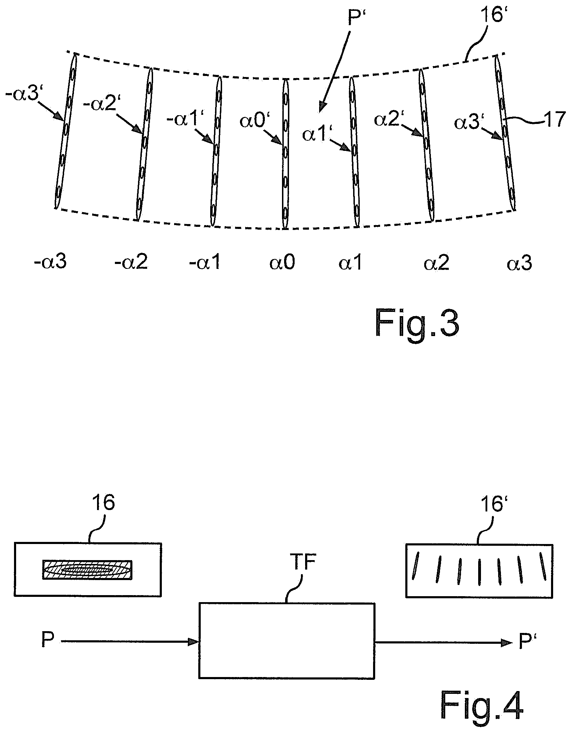

Aus der Sendeeinrichtung 8' gemäß dem Stand der Technik resultiert ein Ist-Sichtfeld 16', welches in Fig. 3 gezeigt ist. Das Ist-Sichtfeld 16' weist eine Ist-Form P' auf und ist im vorliegenden Fall fächerförmig ausgebildet. In Fig. 3 sind dabei Beleuchtungsstreifen 17 für verschiedene Sollwerte -α3, -α2, -α1, α0, +α1, +α2, +α3 des Abtastwinkels α gezeigt. Jeder Beleuchtungsstreifen 17 charakterisiert einen Istwert -α3', -α2', -α1', α0', +α1', +α2', +α3' des Abtastwinkels α entspricht einer von dem Lichtstrahl 10 ausgeleuchtete Spalte auf einer Zielfläche (Target) zu einem jeweiligen Messzeitpunkt, wobei jedem Messzeitpunkt ein Sollwert -α3 bis +α3 für den Abtastwinkel α zugeordnet ist, unter welchem der Lichtstrahl 10 zu diesem Messzeitpunkt ausgesendet werden soll. Idealerweise, also wenn die von der Ablenkeinheit 15' bereitgestellten Istwerte -α3' bis +α3' tatsächlich den Sollwerten -α3 bis +α3 entsprechen, sind die Beleuchtungsstreifen 17 senkrecht orientiert, sodass sich ein Soll-Sichtfeld 16 mit einer rechteckigen Soll-Form P (siehe Fig. 4) bildet. Jedoch ist ersichtlich, dass insbesondere die äußeren Beleuchtungsstreifen 17 bei den Abtastwinkeln -α3 und +α3, welche Ränder des Sichtfeldes 16' bilden, nicht senkrecht orientiert ist, sodass das fächerförmige Ist-Sichtfeld 16' gegenüber dem Soll-Sichtfeld 16 verzerrt ist. Mit steigendem Abtastwinkel α vergrößert sich also auch die Verzerrung des Sichtfeldes 16'.

Fig. 4 ist ein Zusammenhang zwischen der Soll-Form P des Soll-Sichtfeldes 16 und der Ist-Form P' des Ist-Sichtfeldes 16' gezeigt. Dabei ist die Ist-Form P' des Ist-Sichtfeldes 16' über eine Transferfunktion TF mit der Soll-Form P des Soll-Sichtfeldes 16 gemäß der Formel P * TF = P' gekoppelt. Die Transferfunktion TF beschreibt dabei die Verzerrung des Ist-Sichtfeldes 16' bezüglich des Soll-Sichtfeldes 16 beziehungsweise die Abweichung der Istwerte -α3' bis +α3' des Abtastwinkels α von den Sollwerten -α3 bis +α3 des Abtastwinkels α, welche durch den schwenkbaren Spiegel 18 verursacht wird.

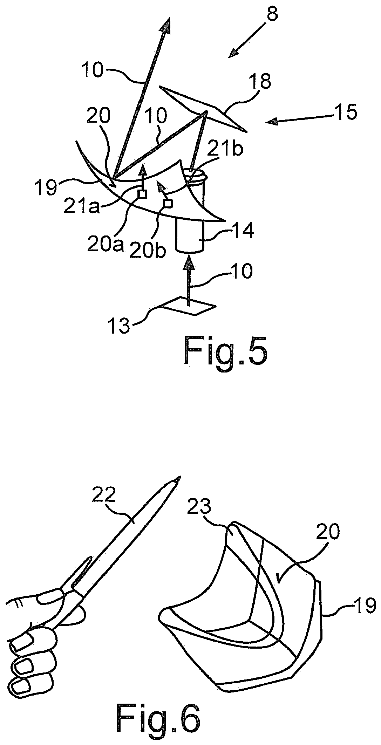

Um nun das Ist-Sichtfeld 16' in das Soll-Sichtfeld 16 zu überführen, wird eine inverse Transferfunktion RTF bestimmt, sodass die Formel P*(TF*RTF)=P beziehungsweise P'*RTF=P gilt. Zum Bereitstellen der inversen Transferfunktion RTF wird für die optische Erfassungsvorrichtung 3 eine Sendeeinrichtung 8 bereitgestellt, wie sie in Fig. 5 gezeigt ist. Die Sendeeinrichtung 8 weist hier neben einer Lichtquelle 13, welche beispielsweise zumindest ein Sendeelement in Form von einer Laserdiode umfasst, und neben dem Kollimator 14 eine Ablenkeinheit 15 auf, welche im vorliegenden Fall neben dem schwenkbaren Spiegel 18 einen Freiformspiegel 19 umfasst. Der von der Lichtquelle 13 erzeugte Lichtstrahl 10 wird zunächst auf den schwenkbaren Spiegel 18 ausgesendet, welcher den Lichtstrahl 10 auf eine spiegelnde Oberfläche 20 des Freiformspiegels 19 reflektiert. Der Freiformspiegel 19 ist dazu ausgelegt, den Lichtstrahl 10 derart in den Umgebungsbereich 4 zu reflektieren, dass sich das Soll-Sichtfeld 16 mit der Soll-Form P ergibt. Die dem schwenkbaren Spiegel 18 zugewandte Oberfläche 20 des Freiformspiegels 19 ist hier konkav gewölbt. Bei dem Freiformspiegel 19 weisen also Oberflächenelemente 20a, 20b unterschiedliche Neigungswinkel 21a, 21b auf. Dabei ist jedem Neigungswinkel 21a, 21b ein Sollwert -α3 bis +α3 für den Abtastwinkel α zugeordnet, sodass das jeweilige Oberflächenelement 20a, 20b den Lichtstrahl 10 unter dem zugeordneten Sollwert -α3 bis +α3 für den Abtastwinkel α reflektiert und somit die Abweichung zwischen den Istwerten -α3' bis +α3' des Abtastwinkels α und den Sollwerten -α3 bis +α3 des Abtastwinkels α kompensiert. Dieser Freiformspiegel 19 weist die inverse Transferfunktion RTF auf. Anders ausgedrückt wird mittels der Neigungswinkel 21a, 21b der Oberflächenelemente 20a, 20b des Freiformspiegels 19 die inverse Transferfunktion RTF realisiert. Die Neigungswinkel 21a, 21b der Oberflächenelemente 20a, 20b werden in Abhängigkeit von den Schwenkwinkeln des schwenkbaren Spiegels 18 und damit in Abhängigkeit von den jeweiligen bereitzustellenden Sollwerten -α3 bis +α3 des Abtastwinkels α bestimmt.

In Fig. 6 ist beispielhaft gezeigt, wie die spiegelnde Oberfläche 20 eines Freiformspiegels 19 ein Objekt, beispielsweise einen Stift 22, abbildet. Eine Abbildung 23 des Stiftes 22 auf der Oberfläche 20 des Freiformspiegels 19 ist verzerrt, da auf die Oberfläche 20 des Freiformspiegels 19 einfallendes Licht aufgrund der Wölbung der Oberfläche 20 in unterschiedliche Richtungen reflektiert wird.

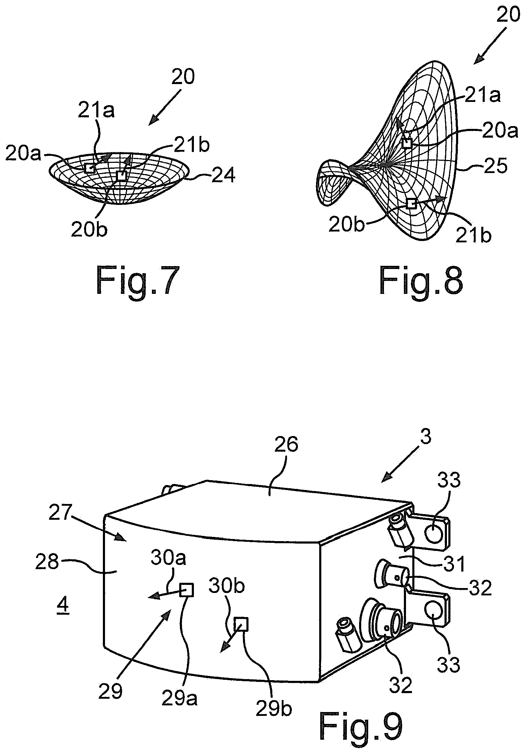

Fig. 7 und Fig. 8 zeigen unterschiedliche Oberflächenverläufe 24, 25 der spiegelnden Oberfläche 20 des Freiformspiegels 19. Der Oberflächenverlauf 24 gemäß Fig. 7 ist beispielsweise gemäß einer Oberfläche eines Kugelsegments geformt. Der Oberflächenverlauf 25 gemäß Fig. 8 weist Bereiche mit unterschiedlichen Krümmungsvorzeichen, also Bereiche mit positiver Krümmung und Bereiche mit negativer Krümmung, auf. Der Oberflächenverlauf 25 weist hier eine näherungsweise sattelförmige Form auf.

Die Oberfläche 20 wird dabei nach der Bestimmung der Transferfunktion TF so bestimmt, dass durch ihren Oberflächenverlauf 24, 25 die inverse Transferfunktion RTF realisiert wird. Somit kann mittels des Freiformspiegels 19 eine Sendeeinrichtung 8 realisiert werden, deren Sichtfeld 16 die rechteckige Soll-Form P aufweist.

In Fig. 9 ist eine Ausführungsform der als Laserscanner ausgebildeten optischen Erfassungsvorrichtung 3 gezeigt. Die optische Erfassungsvorrichtung 3 weist ein Gehäuse 26 auf, welches die Sendeeinrichtung 8 und die Empfangseinrichtung 9 umgibt. Eine im eingebauten Zustand der optischen Erfassungsvorrichtung 3 am Kraftfahrzeug 1 dem Umgebungsbereich 4 zugewandte Frontseite 27 des Gehäuses 25 weist hier ein Linsenelement 28 mit einer Freiformfläche 29 auf. Oberflächenelemente 29a, 29b der Freiformfläche 29 des Linsenelementes 28 weisen hier unterschiedliche Neigungswinkel 30a, 30b auf. Dabei kann jedem Neigungswinkel 30a, 30b ebenfalls ein Sollwert -α3 bis +α3 für den Abtastwinkel α zugeordnet sein, sodass das jeweilige Oberflächenelement 30a, 30b den von der Ablenkeinheit 15 reflektierten Lichtstrahl 10 derart in den Umgebungsbereich 4 transmittiert, dass eine nicht vollständig von dem Freiformspiegel 19 kompensierte Abweichung zwischen den Istwerten -α3' bis +α3 und den Sollwerten - α3 bis +α3 für den Abtastwinkel α beim Transmittieren insbesondere vollständig kompensiert wird. Die Neigungswinkel 30a, 30b der Oberflächenelemente 29a, 29b werden beispielsweise ebenfalls in Abhängigkeit von den Schwenkwinkeln des schwenkbaren Spiegels 18 und damit in Abhängigkeit von den jeweiligen bereitzustellenden Sollwerten -α3 bis +α3 des Abtastwinkels α bestimmt.

Der Lichtstrahl 10 wird hier also von der in einem Innenraum des Gehäuses 26 angeordneten Sendeeinrichtung 8 durch die Freiformlinse 28 hindurch in den Umgebungsbereich 4 transmittiert und der in dem Umgebungsbereich 4 reflektierte Teil 11 des Lichtstrahls 10 wird aus dem Umgebungsbereich 4 zu der in dem Innenraum des Gehäuses 26 angeordneten Empfangseinrichtung 9 transmittiert. Das Gehäuse 26 weist hier in einem Seitenbereich 31 außerdem elektrische Anschlusselemente 32 sowie Befestigungselemente 33 zum Befestigen der optischen Erfassungsvorrichtung 3 am Kraftfahrzeug 1 auf.

## Patentansprüche

1. Sendeeinrichtung (8) für eine optische Erfassungsvorrichtung (3) eines Kraftfahrzeugs (1), welche dazu ausgelegt ist, einen Umgebungsbereich (4) des Kraftfahrzeugs (1) mittels eines Lichtstrahls (10) abzutasten, und welche eine Lichtquelle (13) zum Aussenden des Lichtstrahls (10) und eine Ablenkeinheit (15) aufweist, wobei die Ablenkeinheit (15) dazu ausgelegt ist, den von der Lichtquelle (13) auf die Ablenkeinheit (15) ausgesendeten Lichtstrahl (10) unter unterschiedlichen Abtastwinkeln (α) abzulenken, wobei die Ablenkeinheit (15) einen Freiformspiegel (19) aufweist, wobei der Freiformspiegel (19) zumindest zwei Oberflächenelemente (20a, 20b) mit unterschiedlichen Neigungswinkeln (21a, 21b) aufweist und dazu ausgelegt ist, den Lichtstrahl (10) zum Erzeugen eines vorbestimmten Soll-Sichtfeldes (16) der Sendeeinrichtung (8) unter vorbestimmten, mit den Neigungswinkeln (21a, 21b) korrespondierenden Sollwerten (-α3, -α2, -α1, α0, +α1, +α2, +α3) für die Abtastwinkel (α) zu reflektieren, dass
die Ablenkeinheit (15) zusätzlich zu dem Freiformspiegel (19) einen schwenkbaren Spiegel (18) aufweist, welcher dazu ausgelegt ist, den von der Lichtquelle (13) auf den schwenkbaren Spiegel (18) ausgesendeten Lichtstrahl (10) unter zu Schwenkwinkeln des schwenkbaren Spiegels (18) korrespondierenden Istwerten (-α3', -α2', -α1', α0', +α1', +α2', +α3') für den Abtastwinkel (α) zu reflektieren, wobei der Freiformspiegel (19) dazu ausgelegt ist, zum Erzeugen des Soll-Sichtfeldes (16) eine Abweichung zwischen dem durch den schwenkbaren Spiegel (18) bereitgestellten Istwert (-α3', -α2', -α1', α0', +α1', +α2', +α3') und dem Sollwert (-α3, -α2, -α1, α0, +α1, +α2, +α3) für den Abtastwinkel (α) zu kompensieren, dass der schwenkbare Spiegel (18) als ein Mikrospiegelaktor mit einer ebenen Oberfläche ausgebildet ist und eine durch die Oberflächenelemente (20a, 20b) des Freiformspiegels (19) gebildete Oberfläche (20) des Freiformspiegels (19) zumindest bereichsweise gewölbt ausgebildet ist, dass
die Neigungswinkel (21a, 21b) der jeweiligen Oberflächenelemente (20a, 20b) des Freiformspiegels (19) in Abhängigkeit von den Schwenkwinkeln des schwenkbaren Spiegels (18) vorgegeben sind und dass
der schwenkbare Spiegel (18) eine charakteristische Transferfunktion (TF) aufweist, durch welche eine Verzerrung eines durch den schwenkbaren Spiegel (18) erzeugten Ist-Sichtfeldes (16') bezüglich des Soll-Sichtfeldes (16) in Abhängigkeit von den Schwenkwinkeln des schwenkbaren Spiegels (18) beschrieben ist, und die Neigungswinkel (21a, 21b) der Oberflächenelemente (20a, 20b) des Freiformspiegels (19) derart bestimmt sind, dass der Freiformspiegel (19) eine Inverse der charakteristischen Transferfunktion (RTF) aufweist.

2. Sendeeinrichtung (8) nach Anspruch 1,
**dadurch gekennzeichnet, dass**
jedem Sollwert (-α3, -α2, -α1, α0, +α1, +α2, +α3) für den Abtastwinkel (α) ein Oberflächenelement (20a, 20b) zum Reflektieren des Lichtstrahls (10) unter dem jeweiligen Sollwert (-α3, -α2, -α1, α0, +α1, +α2, +α3) für den Abtastwinkel (α) zugeordnet ist.

3. Sendeeinrichtung (8) nach Anspruch 1,
**dadurch gekennzeichnet, dass**
der Freiformspiegel (19) unbeweglich in einem optischen Pfad zwischen dem schwenkbaren Spiegel (18) und dem Umgebungsbereich (4) angeordnet ist und dazu ausgelegt ist, den von dem schwenkbaren Spiegel (18) unter den Istwerten (-α3', -α2', -α1', α0', +α1', +α2', +α3') auf den Freiformspiegel (19) reflektierten Lichtstrahl (10) unter den vorbestimmten Sollwerten (-α3, -α2, -α1, α0, +α1, +α2, +α3) für den Abtastwinkel (α) zu reflektieren.

4. Sendeeinrichtung (8) nach Anspruch 1,
**dadurch gekennzeichnet, dass**
die Verzerrung anhand von einer Abweichung von Formen (P, P') von Ebenen des Ist-Sichtfeldes (16') und des Soll-Sichtfeldes (16) senkrecht zu einer Hauptabtastrichtung der Sendeeinrichtung (8) bestimmt ist.

5. Sendeeinrichtung (8) nach einem der vorhergehenden Ansprüche,
**dadurch gekennzeichnet, dass**
die Lichtquelle (13) zum Bereitstellen der Sollwerte (-α3, -α2, -α1, α0, +α1, +α2, +α3) für den Abtastwinkel (α) zumindest zwei separat ansteuerbare Sendeelemente aufweist.

6. Sendeeinrichtung (8) nach einem der vorhergehenden Ansprüche,
**dadurch gekennzeichnet, dass**
die Sendeeinrichtung (8) zusätzlich ein Linsenelement (28) mit einer Freiformfläche (29) zum Transmittieren des von der Ablenkeinheit (15) abgelenkten Lichtstrahls (10) in den Umgebungsbereich (4) aufweist, wobei das Linsenelement (28) dazu ausgelegt ist, eine Abweichung eines von der Ablenkeinheit (15) erzeugten Istwertes von dem Sollwert (-α3, -α2, -α1, α0, +α1, +α2, +α3) für den Abtastwinkel (α) zu kompensieren.

7. Sendeeinrichtung (8) nach einem der vorhergehenden Ansprüche,
**dadurch gekennzeichnet, dass**
eine Ebene des mittels der Sollwerte (-α3, -α2, -α1, α0, +α1, +α2, +α3) für den Abtastwinkel (α) erzeugten Soll-Sichtfeldes (16) senkrecht zu einer Hauptabtastrichtung der Sendeeinrichtung (8) rechteckförmig ausgebildet ist.

8. Optische Erfassungsvorrichtung (3), insbesondere Laserscanner, für ein Kraftfahrzeug (1) zum Überwachen eines Umgebungsbereiches (4) des Kraftfahrzeugs (1), mit einer Sendeeinrichtung (8) nach einem der vorhergehenden Ansprüche und einer Empfangseinrichtung (9), wobei die Empfangseinrichtung (9) dazu ausgelegt ist, einen an einem Objekt (O) in dem Umgebungsbereich (4) reflektierten Teil (11) des Lichtstrahls (10) zu empfangen und anhand einer Zeitdauer zwischen dem Aussenden des Lichtstrahls (10) und dem Empfangen des reflektierten Teils (11) des Lichtstrahls (10) einen Abstand des Objektes (O) zu dem Kraftfahrzeug (1) zu bestimmen.

9. Kraftfahrzeug (1) mit zumindest einer optischen Erfassungsvorrichtung (3) nach Anspruch 8.

10. Verfahren zum Erzeugen eines Soll-Sichtfeldes (16) für eine Sendeeinrichtung (8) einer optischen Erfassungsvorrichtung (3) eines Kraftfahrzeugs (1), wobei für die Sendeeinrichtung (8) eine Lichtquelle (13) zum Aussenden des Lichtstrahls (10) und eine Ablenkeinheit (15) bereitgestellt werden, wobei mittels der Ablenkeinheit (15) ein von der Lichtquelle (13) auf die Ablenkeinheit (15) ausgesendeter Lichtstrahl (10) unter unterschiedlichen Abtastwinkeln (α) abgelenkt wird, wobei ein Freiformspiegel (19) für die Ablenkeinheit (15) bereitgestellt wird, wobei der Freiformspiegel (19) mit zumindest zwei Oberflächenelementen (20a, 20b) mit unterschiedlichen Neigungswinkeln (21a, 21b) gefertigt wird und der Lichtstrahl (10) zum Erzeugen des Soll-Sichtfeldes (16) der Sendeeinrichtung (8) unter vorbestimmten, mit den Neigungswinkeln (21a, 21b) korrespondierenden Sollwerten (-α3, -α2, -α1, α0, +α1, +α2, +α3) für die Abtastwinkel (α) reflektiert wird, dass für die Ablenkeinheit (15) zusätzlich zu dem Freiformspiegel (19) ein schwenkbarer Spiegel (18) bereitgestellt wird, wobei der von der Lichtquelle (13) auf den schwenkbaren Spiegel (18) ausgesendeten Lichtstrahl (10) unter zu Schwenkwinkeln des schwenkbaren Spiegels (18) korrespondierenden Istwerten (-α3', -α2', -α1', α0', +α1', +α2', +α3') für den Abtastwinkel (α) reflektiert wird, wobei mittels des Freiformspiegels (19) zum Erzeugen des Soll-Sichtfeldes (16) eine Abweichung zwischen dem durch den schwenkbaren Spiegel (18) bereitgestellten Istwert (-α3', -α2', -α1', α0', +α1', +α2', +α3') und dem Sollwert (-α3, -α2, -α1, α0, +α1, +α2, +α3) für den Abtastwinkel (α) kompensiert wird, dass als schwenkbarer Spiegel (18) ein Mikrospiegelaktor mit einer ebenen Oberfläche bereitgestellt wird und eine durch die Oberflächenelemente (20a, 20b) des Freiformspiegels (19) gebildete Oberfläche (20) des Freiformspiegels (19) zumindest bereichsweise gewölbt ausgebildet ist, dass
die Neigungswinkel (21a, 21b) der jeweiligen Oberflächenelemente (20a, 20b) des Freiformspiegels (19) in Abhängigkeit von den Schwenkwinkeln des schwenkbaren Spiegels (18) vorgegeben werden und dass
der schwenkbare Spiegel (18) eine charakteristische Transferfunktion (TF) aufweist, durch welche eine Verzerrung eines durch den schwenkbaren Spiegel (18) erzeugten Ist-Sichtfeldes (16') bezüglich des Soll-Sichtfeldes (16) in Abhängigkeit von den Schwenkwinkeln des schwenkbaren Spiegels (18) beschrieben wird, und die Neigungswinkel (21a, 21b) der Oberflächenelemente (20a, 20b) des Freiformspiegels (19) derart bestimmt werden, dass der Freiformspiegel (19) eine Inverse der charakteristischen Transferfunktion (RTF) aufweist.

## Claims

1. Transmitter device (8) for an optical detection apparatus (3) of a motor vehicle (1), designed to scan a surround region (4) of the motor vehicle (1) by means of a light beam (10) and comprising a light source (13) for emitting the light beam (10) and a deflection unit (15), wherein the deflection unit (15) is designed to deflect the light beam (10) transmitted from the light source (13) to the deflection unit (15) at different scanning angles (α), wherein
the deflection unit (15) comprises a free-form mirror (19), wherein the free-form mirror (19) comprises at least two surface elements (20a, 20b) with different angles of inclination (21a, 21b) and said free-form mirror is designed to reflect the light beam (10) at predetermined target values (-α3, -α2, -α1, α0, +α1, +α2, +α3) for the scanning angles (α) that correspond to the angles of inclination (21a, 21b), for the purposes of generating a predetermined target field of view (16) of the transmitter device (8), wherein
the deflection unit (15) comprises in addition to the free-form mirror (19) a pivotable mirror (18) which is designed to reflect the light beam (10) transmitted from the light source (13) to the pivotable mirror (18) at actual values (-α3', -α2', -α1', α0', +α1', +α2', +α3') for the scanning angle (α) that correspond to pivot angles of the pivotable mirror (18), wherein the free-form mirror (19) is designed to compensate a deviation between the actual value (-α3', -α2', -α1', α0', +α1', +α2', +α3') provided by the pivotable mirror (18) and the target value (-α3, -α2, -α1, α0, +α1, +α2, +α3) for the scanning angle (α), for the purposes of generating the target field of view (16), wherein
the pivotable mirror (18) is designed as a micromirror actuator with a plane surface and a surface (20) of the free-form mirror (19) formed by the surface elements (20a, 20b) of the free-form mirror (19) has, at least in regions, an arched form, wherein
the angles of inclination (21a, 21b) of the respective surface elements (20a, 20b) of the free-form mirror (19) are specified on the basis of the pivot angles of the pivotable mirror (18), and wherein
the pivotable mirror (18) has a characteristic transfer function (TF) which as a function of the pivot angles of the pivotable mirror (18) describes a distortion of an actual field of view (16') generated by the pivotable mirror (18) in relation to the target field of view (16), and the angles of inclination (21a, 21b) of the surface elements (20a, 20b) of the free-form mirror (19) are determined in such a way that the free-form mirror (19) exhibits an inverse of the characteristic transfer function (RTF).

2. Transmitter device (8) according to Claim 1, **characterized in that**
each target value (-α3, -α2, -α1, α0, +α1, +α2, +α3) for the scanning angle (α) is assigned a surface element (20a, 20b) for reflecting the light beam (10) at the respective target value (-α3, -α2, -α1, α0, +α1, +α2, +α3) for the scanning angle (α).

3. Transmitter device (8) according to Claim 1, **characterized in that**
the free-form mirror (19) is arranged in stationary fashion in an optical path between the pivotable mirror (18) and the surround region (4) and is designed to reflect the light beam (10) at the predetermined target values (-α3, -α2, -α1, α0, +α1, +α2, +α3) for the scanning angle (α), said light beam having reflected by the pivotable mirror (18) to the free-form mirror (19) at the actual values (-α3', -α2', -α1', α0', +α1', +α2', +α3').

4. Transmitter device (8) according to Claim 1, **characterized in that**
the distortion is determined on the basis of the deviation of forms (P, P') of planes of the actual field of view (16') and the target field of view (16) perpendicular to the principal scanning direction of the transmitter device (8).

5. Transmitter device (8) according to any one of the preceding claims,
**characterized in that**
the light source (13) comprises at least two separately controllable transmitter elements for the purposes of providing the target values (-α3, -α2, -α1, α0, +α1, +α2, +α3) for the scanning angle (α).

6. Transmitter device (8) according to any one of the preceding claims,
**characterized in that**
the transmitter device (8) additionally comprises a lens element (28) with a free-form surface (29) for transmitting the light beam (10) that was deflected by the deflection unit (15) into the surround region (4), wherein the lens element (28) is designed to compensate a deviation of an actual value generated by the deflection unit (15) from the target value (-α3, -α2, -α1, α0, +α1, +α2, +α3) for the scanning angle (α).

7. Transmitter device (8) according to any one of the preceding claims,
**characterized in that**
a plane of the target field of view (16) generated by means of the target values (-α3, -α2, -α1, α0, +α1, +α2, +α3) for the scanning angle (α) has a rectangular form perpendicular to a principal scanning direction of the transmitter device (8).

8. Optical detection apparatus (3), more particularly a laser scanner, for a motor vehicle (1) for monitoring a surround region (4) of the motor vehicle (1), comprising a transmitter device (8) according to any one of the preceding claims and a receiver device (9), wherein the receiver device (9) is designed to receive a portion (11) of the light beam (10) that was reflected at an object (O) in the surround region (4) and determine a distance from the object (O) to the motor vehicle (1) on the basis of a time elapsed between the emission of the light beam (10) and the reception of the reflected portion (11) of the light beam (10).

9. Motor vehicle (1) comprising at least one optical detection apparatus (3) according to Claim 8.

10. Method for generating a target field of view (16) for a transmitter device (8) of an optical detection apparatus (3) of a motor vehicle (1), wherein a light source (13) for emitting the light beam (10) and a deflection unit (15) are provided for the transmitter device (8), wherein a light beam (10) transmitted from the light source (13) to the deflection unit (15) is deflected at different deflection angles (α) by means of the deflection device (15), wherein
a free-form mirror (19) is provided for the deflection unit (15), wherein the free-form mirror (19) is manufactured with at least two surface elements (20a, 20b) with different angles of inclination (21a, 21b) and the light beam (10) is reflected at predetermined target values (-α3, -α2, -α1, α0, +α1, +α2, +α3) for the scanning angles (α) that correspond to the angles of inclination (21a, 21b), for the purposes of generating the target field of view (16) of the transmitter device (8), wherein a pivotable mirror (18) is provided for the deflection unit (15) in addition to the free-form mirror (19), wherein the light beam (10) transmitted from the light source (13) to the pivotable mirror (18) is reflected at actual values (-α3', -α2', -α1', α0', +α1', +α2', +α3') for the scanning angle (α) that correspond to pivot angles of the pivotable mirror (18), wherein the free-form mirror (19) is used to compensate a deviation between the actual value (-α3', -α2', -α1', α0', +α1', +α2', +α3') provided by the pivotable mirror (18) and the target value (-α3, -α2, -α1, α0, +α1, +α2, +α3) for the scanning angle (α), for the purposes of generating the target field of view (16), wherein
a micromirror actuator with a plane surface is provided as the pivotable mirror (18) and a surface (20) of the free-form mirror (19) formed by the surface elements (20a, 20b) of the free-form mirror (19) has, at least in regions, an arched form, wherein
the angles of inclination (21a, 21b) of the respective surface elements (20a, 20b) of the free-form mirror (19) are specified on the basis of the pivot angles of the pivotable mirror (18), and wherein
the pivotable mirror (18) has a characteristic transfer function (TF) which as a function of the pivot angles of the pivotable mirror (18) describes a distortion of an actual field of view (16') generated by the pivotable mirror (18) in relation to the target field of view (16), and the angles of inclination (21a, 21b) of the surface elements (20a, 20b) of the free-form mirror (19) are determined in such a way that the free-form mirror (19) exhibits an inverse of the characteristic transfer function (RTF).

## Revendications

1. Dispositif d'émission (8) pour un arrangement de détection optique (3) d'un véhicule automobile (1), lequel est conçu pour balayer une zone environnante (4) du véhicule automobile (1) au moyen d'un rayon lumineux (10), et lequel possède une source de lumière (13) destinée à émettre le rayon lumineux (10) et une unité de déviation (15), l'unité de déviation (15) étant conçue pour dévier le rayon lumineux (10) émis par la source de lumière (13) sur l'unité de déviation (15) sous différents angles de balayage (a),
l'unité de déviation (15) possédant un miroir de forme libre (19), le miroir de forme libre (19) possédant au moins deux éléments de surface (20a, 20b) ayant des angles d'inclinaison (21a, 21b) différents et étant conçu pour réfléchir le rayon lumineux (10) en vue de générer un champ de vision de consigne (16) prédéterminé du dispositif d'émission (8) sous des valeurs de consigne (-α3, -α2, -α1, α0, +α1, +α2, +α3) prédéterminée, correspondant aux angles d'inclinaison (21a, 21b), pour les angles de balayage (α),
l'unité de déviation (15) possédant, en plus du miroir de forme libre (19), un miroir pivotant (18), lequel est conçu pour réfléchir le rayon lumineux (10) émis par la source de lumière (13) sur le miroir pivotant (18) sous des valeurs réelles (-α3', -α2', -α1', α0', +α1', +α2', +α3'), correspondant aux angles de pivotement du miroir pivotant (18), pour les angles de balayage (a), le miroir de forme libre (19) étant conçu pour, en vue de générer le champ de vision de consigne (16), compenser un écart entre la valeur réelle (-α3', -α2', -α1', α0', +α1', +α2', +α3') fournie par le miroir pivotant (18) et la valeur de consigne (-α3, -α2, -α1, α0, +α1, +α2, +α3) pour l'angle de balayage (a),
le miroir pivotant (18) étant réalisé sous la forme d'un actionneur à micromiroir avec une surface plane et une surface (20) du miroir de forme libre (19) formée par les éléments de surface (20a, 20b) du miroir de forme libre (19) étant configurée bombée au moins dans certaines zones,
les angles d'inclinaison (21a, 21b) des éléments de surface (20a, 20b) respectifs du miroir de forme libre (19) étant prédéfinis en fonction des angles de pivotement du miroir pivotant (18) et
le miroir pivotant (18) possédant une fonction de transfert (TF) caractéristique, par laquelle est décrite une déformation d'un champ de vision réel (16') généré par le miroir pivotant (18) en référence au champ de vision de consigne (16) en fonction des angles de pivotement du miroir pivotant (18), et les angles d'inclinaison (21a, 21b) des éléments de surface (20a, 20b) du miroir de forme libre (19) étant déterminés de telle sorte que le miroir de forme libre (19) possède une inverse de la fonction de transfert (RTF) caractéristique.

2. Dispositif d'émission (8) selon la revendication 1, **caractérisé en ce qu'**un élément de surface (20a, 20b) est associé à chaque valeur de consigne (-α3, -α2, -α1, α0, +α1, +α2, +α3) pour l'angle de balayage (α) en vue de réfléchir le rayon lumineux (10) sous la valeur de consigne (-α3, -α2, -α1, α0, +α1, +α2, +α3) respective pour l'angle de balayage (α).

3. Dispositif d'émission (8) selon la revendication 1, **caractérisé en ce que** le miroir de forme libre (19) est disposé immobile dans un trajet optique entre le miroir pivotant (18) et la zone environnante (4) et est conçu pour réfléchir, sous la valeur de consigne (-α3, -α2, - α1, α0, +α1, +α2, +α3) pour l'angle de balayage (α), le rayon lumineux (10) réfléchi sur le miroir de forme libre (19) sous les valeurs réelles (-α3', -α2', -α1', α0', +α1', +α2', +α3').

4. Dispositif d'émission (8) selon la revendication 1, **caractérisé en ce que** la déformation est déterminée à l'aide d'un écart des formes (P, P') des plans du champ de vision réel (16') et du champ de vision de consigne (16) perpendiculairement à une direction de balayage principale du dispositif d'émission (8).

5. Dispositif d'émission (8) selon l'une des revendications précédentes, **caractérisé en ce que** la source de lumière (13) possède au moins deux éléments émetteurs pouvant être commandés séparément pour la fourniture des valeurs de consigne (-α3, -α2, -α1, α0, +α1, +α2, +α3) pour l'angle de balayage (α).

6. Dispositif d'émission (8) selon l'une des revendications précédentes, **caractérisé en ce que** le dispositif d'émission (8) possède en plus un élément lentille (28) ayant une surface de forme libre (29) servant à la transmission dans la zone environnante (4) du rayon lumineux (10) dévié par l'unité de déviation (15), l'élément lentille (28) étant conçu pour compenser un écart entre une valeur réelle générée par l'unité de déviation (15) et la valeur de consigne (-α3, -α2, -α1, α0, +α1, +α2, +α3) pour l'angle de balayage (α).

7. Dispositif d'émission (8) selon l'une des revendications précédentes, **caractérisé en ce qu'**un plan du champ de vision de consigne (16) généré au moyen des valeurs de consigne (-α3, -α2, -α1, α0, +α1, +α2, +α3) pour l'angle de balayage (a), perpendiculairement à une direction de balayage principale du dispositif d'émission (8), est de configuration rectangulaire.

8. Arrangement de détection optique (3), notamment appareil de balayage à laser, pour un véhicule automobile (1) destiné à surveiller une zone environnante (4) du véhicule automobile (1), comprenant un dispositif d'émission (8) selon l'une des revendications précédentes et un dispositif de réception (9), le dispositif de réception (9) étant conçu pour recevoir une partie (11) du rayon lumineux (10) réfléchie sur un objet (O) dans la zone environnante (4) et, à l'aide d'une durée entre l'émission du rayon lumineux (10) et la réception de la partie réfléchie (11) du rayon lumineux (10), déterminer une distance entre l'objet (O) et le véhicule automobile (1) .

9. Véhicule automobile (1) équipé d'au moins un arrangement de détection optique (3) selon la revendication 8.

10. Procédé pour générer un champ de vision de consigne (16) pour un dispositif d'émission (8) d'un arrangement de détection optique (3) d'un véhicule automobile (1), une source de lumière (13) destinée à émettre le rayon lumineux (10) et une unité de déviation (15) étant fournies pour le dispositif d'émission (8), un rayon lumineux (10) émis par la source de lumière (13) sur l'unité de déviation (15) étant dévié par l'unité de déviation (15) sous différents angles de balayage (a), un miroir de forme libre (19) étant fourni pour l'unité de déviation (15), le miroir de forme libre (19) étant fabriqué avec au moins deux éléments de surface (20a, 20b) ayant des angles d'inclinaison (21a, 21b) différents et le rayon lumineux (10), en vue de générer le champ de vision de consigne (16) du dispositif d'émission (8), étant réfléchi sous des valeurs de consigne (-α3, -α2, - α1, α0, +α1, +α2, +α3) prédéterminée, correspondant aux angles d'inclinaison (21a, 21b), pour les angles de balayage (α),
en plus du miroir de forme libre (19), un miroir pivotant (18) étant fourni pour l'unité de déviation (15), le rayon lumineux (10) émis par la source de lumière (13) sur le miroir pivotant (18) étant réfléchi sous des valeurs réelles (-α3', -α2', -α1', α0', +α1', +α2', +α3'), correspondant aux angles de pivotement du miroir pivotant (18), pour les angles de balayage (a), un écart entre la valeur réelle (-α3', -α2', -α1', α0', +α1', +α2', +α3') fournie par le miroir pivotant (18) et la valeur de consigne (-α3, -α2, -α1, α0, +α1, +α2, +α3) pour l'angle de balayage (α) étant compensé au moyen du miroir de forme libre (19) en vue de générer le champ de vision de consigne (16),
le miroir pivotant (18) fourni étant un actionneur à micromiroir avec une surface plane et une surface (20) du miroir de forme libre (19) formée par les éléments de surface (20a, 20b) du miroir de forme libre (19) étant configurée bombée au moins dans certaines zones,
les angles d'inclinaison (21a, 21b) des éléments de surface (20a, 20b) respectifs du miroir de forme libre (19) étant prédéfinis en fonction des angles de pivotement du miroir pivotant (18) et
le miroir pivotant (18) possédant une fonction de transfert (TF) caractéristique, par laquelle est décrite une déformation d'un champ de vision réel (16') généré par le miroir pivotant (18) en référence au champ de vision de consigne (16) en fonction des angles de pivotement du miroir pivotant (18), et les angles d'inclinaison (21a, 21b) des éléments de surface (20a, 20b) du miroir de forme libre (19) étant déterminés de telle sorte que le miroir de forme libre (19) possède une inverse de la fonction de transfert (RTF) caractéristique.
